# EUROPÄISCHE PATENTANMELDUNG

(11) **EP 0 960 774 A2**
(43) Veröffentlichungstag der Anmeldung: **01.12.1999**
(21) Anmeldenummer: 99104990.9
(22) Anmeldetag: 12.03.1999
(51) Int. Cl.: B60Q 1/30

(54) **Kontaktvorrichtung und Leuchte für einen lösbaren Koffer auf einer Fahrzeughaube eines Kraftfahrzeugs**

(30) Priorität: 27.05.1998 DE 19825393
(71) Anmelder: Dr.Ing. h.c.F. Porsche Aktiengesellschaft, 70435 Stuttgart (DE)
(72) Erfinder: Braun, Uwe, 73765 Neuhausen (DE)

(57) **Zusammenfassung**

Die Erfindung bezieht sich auf eine Kontaktvorrichtung (27) und eine Leuchte (31,32) für einen lösbaren Koffer (7) auf einer Fahrzeughaube, insbesondere auf einer Heckhaube (2) eines Kraftfahrzeugs. Um eine Kontaktvorrichtung (27) und eine Leuchte (31,32) für einen lösbaren Koffer (7) auf einer Fahrzeughaube eines Kraftfahrzeuges zu schaffen, mit der die Leuchte (31,32) beim Aufsetzen des Koffers (7) mit dem Fahrzeug elektrisch verbunden ist, wird bezüglich der Kontaktvorrichtung wird vorgeschlagen, diese an Befestigungselementen anzuordnen, die den Koffer (7) mit der Fahrzeughaube verbinden. Hinsichtlich der Leuchte (31,32) wird vorgeschlagen, diese außenseits am Koffer (7) anzuordnen und dabei den Koffer (7) in zweischaliger Bauweise auszuführen. Die Leuchte (31,32) ist an einer Schale (7a) gehalten und durchdringt nicht eine innere Schale (7b) des Koffers (7).

## Beschreibung

Die Erfindung bezieht sich auf eine Kontaktvorrichtung und eine Leuchte für einen lösbaren Koffer auf einer Fahrzeughaube eines Kraftfahrzeugs nach dem Oberbegriff der Ansprüch 1 und 6.

Es ist Aufgabe der Erfindung, eine Kontaktvorrichtung und eine Leuchte für einen lösbaren Koffer auf einer Fahrzeughaube eines Kraftfahrzeuges zu schaffen, mit der die Leuchte beim Aufsetzen des Koffers mit dem Fahrzeug elektrisch verbunden ist.

Diese Aufgabe wird erfindungsgemäß durch die Merkmale der Ansprüche 1 und 6 gelöst.

Bezüglich der Kontaktvorrichtung wird vorgeschlagen, diese an Befestigungselementen anzuordnen, die den Koffer mit der Fahrzeughaube verbinden. Damit sind zur Herstellung einer elektrischen Verbindung zwischen dem Koffer und dem Fahrzeug über die ohnehin notwendigen Befestigungselemente keine weiteren Elemente notwendig, womit zusätzliche Arbeiten und eine zusätzliche Durchdringung der Fahrzeughaube vermieden werden.

In vorteilhafter Weiterbildung der Kontaktvorrichtung wird vorgeschlagen, daß diese aus einem Kontaktelement und einer Kontaktfeder besteht. Vorzugsweise ist das beispielsweise punktförmig ausgestaltete Kontaktelement an einer Abstützfläche des Befestigungselementes angeordnet, auf der der Koffer aufliegt. Die Kontaktfeder ist korrespondierend zum Kontaktelement am Boden des Koffers angeordnet. Durch diese Ausbildung der Kontaktvorrichtung ist gewährleistet, daß mit dem Aufsetzen des Koffers ohne weitere Maßnahmen eine elektrische Verbindung zwischen dem Koffer und dem Fahrzeug hergestellt ist. Durch die Relativbewegung zwischen Koffer und Befestigungselement beim Aufsetzen des Koffers werden darüber hinaus an Kontaktelement und Kontaktfeder befindliche Korrosionsschichten entfernt, so daß ein geringer Übergangswiderstand gewährleistet ist. Die vorgeschlagene Anordnung fügt sich besonders harmonisch in den optischen Gesamteindruck ein, da bei aufgesetztem Koffer die Kontaktvorrichtung nicht sichtbar ist und bei abgenommenem Koffer das Kontaktelement unauffällig in das Befestigungselement integriert ist.

Zur Anordnung des Kontaktelementes im Befestigungselement wird vorgeschlagen, einen Teilbereich des Befestigungselementes aus isolierendem Material zu fertigen. Die Größe dieses Teilbereiches ist dabei so zu wählen, daß der Weg einer Oberfläche des Befestigungselementes zwischen dem Kontaktelement und dem nicht isolierten Bereich des Befestigungselementes so groß ist, daß auch bei einem mit Wasser benetzten Befestigungselement vernachlässigbar geringere Kriechströme auftreten.

Hiermit wird die Kontaktkorrosion des Kontaktelementes zumindest stark vermindert. Eine weitere vorteilhafte Maßnahme zur Verminderung von Kontaktkorrosion ist, die Materialien für das Kontaktelement und die Kontaktfeder so zu wählen, daß sie ein ähnliches Normalpotential innerhalb der elektrochemischen Spannungsreihe aufweisen.

Schließlich wird hinsichtlich der Kontaktvorrichtung vorgeschlagen, den Boden des Koffers in zweischaliger Bauweise auszuführen und die Kontaktfeder am äußeren Boden des Koffers anzuordnen. Die Kontaktfeder ist mit einer elektrischen Leitung verbunden₁ die zwischen dem äußeren Boden und einem inneren Boden des Koffers geführt ist. Diese Anordnung zeichnet sich durch einen Leitungsfond aus, bei der die elektrische Leitung gegen Beschädigung sicher geschützt ist.

Für die erfindungsgemäße Leuchte wird vorgeschlagen, diese außenseits am Koffer anzuordnen und dabei den Koffer in zweischaliger Bauweise auszuführen. Die Leuchte ist an einer außeren Schale gehalten und durchdringt nicht eine innere Schale des Koffers. Mit dieser Anordnung ist gewährleistet, daß durch den für die Anordnung der Leuchte notwendigen Ausschnitt in der Außenschale des Koffers kein Wasser in den Innenraum des Koffers eindringen kann.

In vorteilhafter Weiterbildung der Leuchte wird vorgeschlagen₁ auch eine elektrische Leitung zur Stromzufuhr zwischen der äußeren Schale und der inneren Schale zu führen. Bei dieser Anordnung durchdringt weder die Leuchte noch die elektrische Leitung die Innenschale des Koffers, womit der Innenraum gegen Eintritt von Feuchtigkeit gesichert ist.

Besonders vorteilhaft ist die Verwendung einer erfindungsgemäßen Leuchte als Zusatzbremsleuchte, da bei einer Anordnung des Koffers auf der Heckhaube die Sichtbarkeit einer am Fahrzeug angeordneten Zusatzbremsleuchte beeinträchtigt.

Zur Vermeidung eines Parallelbetriebes der Zusatzbremsleuchte am Fahrzeug und der Zusatzbremsleuchte am Koffer wird vorgeschlagen, eine Umschalteinrichtung vorzusehen, die dann die Zusatzbremsleuchte am Koffer anstelle der Zusatzbremsleuchte am Fahrzeug mit einem Bremslichtschalter verbindet, wenn der Koffer auf die Heckhaube aufgesetzt ist.

Zur Ausbildung einer solchen Umschaltvorrichtung wird vorgeschlagen, diese mit einer Einrichtung zur Widerstandserkennung zu versehen. Die Einrichtung zur Widerstandserkennung bestätigt die Umschaltvorrichtung, wenn am entsprechenden Ausgang der Umschaltvorrichtung ein elektrischer Widerstand festgestellt wird, der dem Widerstand der Zusatzbremsleuchte am Koffer entspricht. Alternativ wird für eine Betäigung der Umschaltvorrichtung vorgeschlagen, hierzu einen Reed-Kontakt zu verwenden, der durch einen im Boden des Koffers angeordneten Magneten betätigt ist. Der Reed-Kontakt ist dabei vorzugsweise in einem Befestigungselement für den Koffer angeordnet; bei dieser Anordnung ist der Reed-Kontakt nach außen nicht sichtbar und gleichzeitig durch das Befestigungselement vor Beschädigungen geschützt.

Von besonderem Vorteil ist es, wenn zur elektrischen Verbindung der erfindungsgemäßen Leuchte die erfindungsgemäße Kontaktvorrichtung verwendet ist. Das so gebildete Gesamtsystem wird alleine durch das Aufsetzen des Koffers, d.h. durch das Verbinden des Koffers mit den entsprechenden Befestigungselementen, kontaktiert und zweckgemäß mit einem Bordnetz des Fahrzeuges verbunden. Somit sind außer der mechanischen Verbindung des Koffers mit dem Befestigungselement keine weiteren Arbeitsschritte notwendig; eine Fehlbedienung ist ausgeschlossen.

Ein Ausführungsbeispiel der Erfindung ist in den Zeichnungen dargestellt und wird im nachfolgenden näher beschrieben.

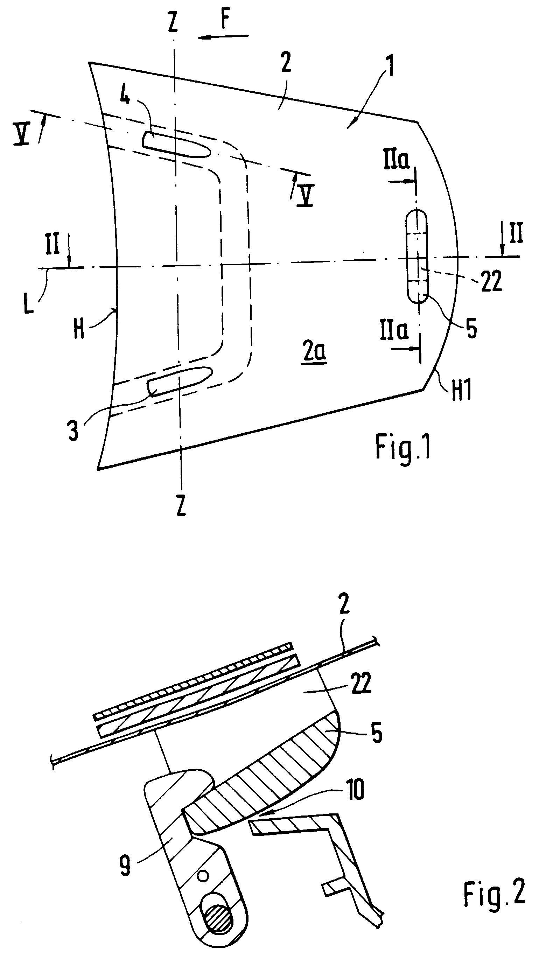

Es zeigen
- Fig. 1: eine Draufsicht auf eine Heckhaube mit drei Befestigungselementen,
- Fig. 2: einen Längsschnitt durch ein vornliegendes Befestigungselement nach der Linie II-II der Fig. 1,
- Fig. 2a: einen Schnitt nach der Linie IIa-IIa der Fig. 1 durch das hintenliegende Befestigungselement,
- Fig. 3: eine Unteransicht eines Koffers mit Arretierplatte und Einfädelkanal,
- Fig. 4: einen Schnitt nach der Linie IV-IV der Fig. 3,
- Fig. 5: einen Längsschnitt durch das vornliegende Befestigungselement nach der Linie V-V der Fig. 1,
- Fig. 6: einen Querschnitt nach der Linie VI-VI der Fig. 5 durch die Rastnase des Befestigungselements und die Arretierplatte des Koffers,
- Fig. 7: einen Längsschnitt durch ein mit einer Kontaktvorrichtung versehenes Befestigungselement und
- Fig. 8: einen Schaltplan zur Verbindung einer im Koffer angeordneten Leuchte mit einem Bremslichtschalter.

Die Aufnahmevorrichtung 1 für einen Koffer 7 auf einer Heckhaube 2 eines Kraftfahrzeuges erfolgt über eine Dreipunkt-Befestigung, welche - in bezug auf die Fahrtrichtung F - zwei vornliegende in einer Querebene Z-Z angeordnete Befestigungselemente 3, 4 nahe einer vorderen Haubenkante H und ein hintenliegendes Befestigungselement 5 nahe einer hinteren Haubenkante H1 und in einer Längsmittenebene L liegend, umfaßt. Die vornliegenden Befestigungselemente 3, 4 stehen mit korrespondierenden Arretierplatten 6, 6a eines Koffers 7 in Eingriff und das hintenliegende Befestigungselement 5 wird über ein am Koffer 7 befindliches Griffelement 8 mit Schloß, insbesondere mit einem Riegel 9 und einer Schloßauflage 10 in Eingriff gebracht und bildet eine Verriegelungs- und Festsetzeinrichtung.

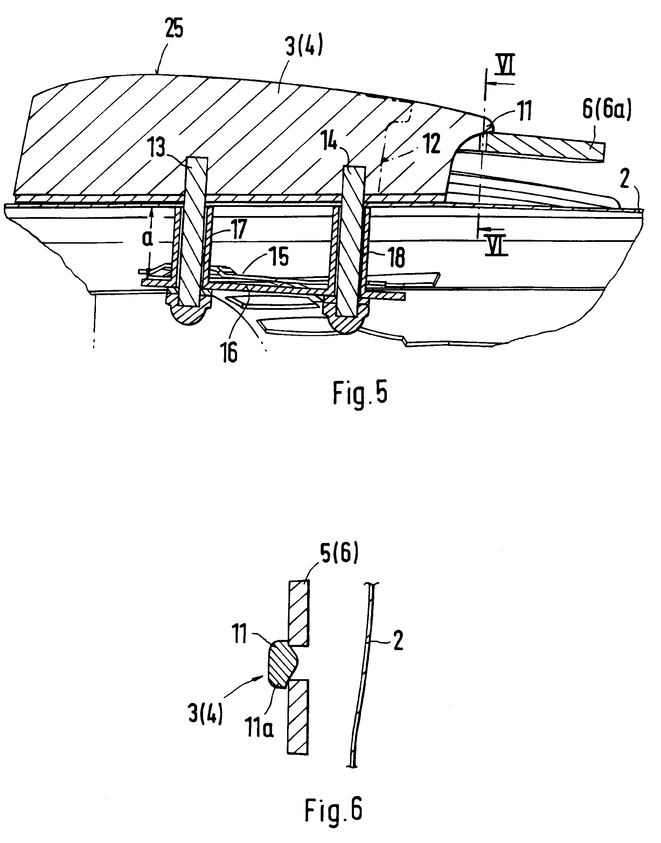

Die Befestigungselemente 3, 4 bestehen jeweils aus länglichen Segmenten mit einer vornliegenden Rastnase 11 (Fig. 5) und wenigstens einer seitlichen Absetzung 12 an mindestens einer Seitenflanke des Elements 3, 4.

Jedes Befestigungselement 3, 4 ist über Schrauben 13, 14 mit der Haube 2 verbunden, die sich an einem Haubenträger 15 abstützen. Hierzu sind die Schrauben 13, 14 in einer Trägerplatte 16 gehalten, an der Hülsen 17, 18 zur Aufnahme der Schrauben und zur Überbrückung eines Abstands a zwischen einem Haubenträger 15 und einem Trägerelement 16 angeformt sind. Gleichzeitig wird über die Abstandshülsen 17, 18 eine Verformung des Haubenträgers 15 sowie der Haube 2 beim Anziehen der Schrauben 13, 14 vermieden.

Zum Einhaken des Koffers 7 auf die Befestigungselemente 3, 4 sind am Kofferboden 7a die Arretierplatten 6, 6a vorgesehen. Diese weisen jeweils einen Schlitz 20 auf, der endseitig einen Einführkanal 21 im Kofferboden 7a besitzt, welcher in diesen eingeformt ist. Die Arretierplatte 6, 6a umgreift die Rastnase 11 und die Abstützfläche 25 des Befestigungselements 3, 4 beim Einhaken, wie Fig. 6 näher zeigt. Die Grundfläche G des Kanals 21 liegt auf der Abstützfläche 25 des Befestigungselements 3, 4 auf.

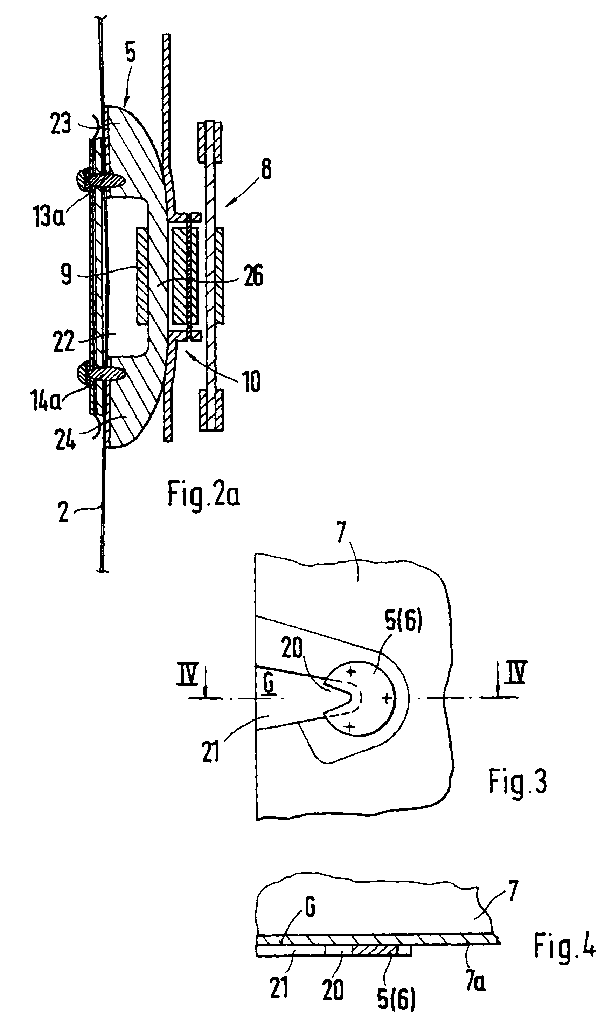

Das hintenliegende Befestigungselement 5 besteht im wesentlichen aus einem brückenförmig ausgebildeten Teil mit einer Öffnung 22 und seitlichen Lagerungsansätzen 23, 24 (Fig. 2a). Diese stützen sich auf der Haube 2 ab und sind über Schrauben 13a, 14a oder dergleichen mit der Haube 2 verbindbar.

Zur Festlegung und Arretierung des Koffers 7 dient der Riegel 9 des Kofferschlosses und die Schloßauflage 10. Von diesen beiden Schloßelementen 9 und 10 wird die Brücke 26 des Befestigungselements 5 von unten und oben fest umgriffen.

Das Aufsetzen des Koffers 7 erfolgt zuerst durch Einfädeln in die vornliegenden Befestigungselemente 3, 4 und einem anschließenden Aufsetzen auf das hintenliegende in der Fahrzeuglängsmittenachse L angeordnete weitere Befestigungselement 5. Durch Betätigung des Schloßmechanismusses 9, 10 wird eine Arretierung des Koffers 7 im Befestigungselement 5 bewirkt, so daß eine feste, lösbare Verbindung mit diesem Befestigungselement 5 gewährleistet ist.

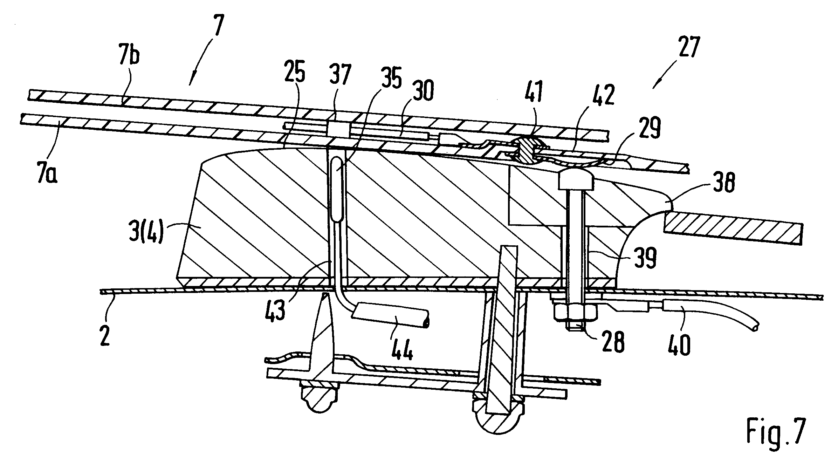

Das in Fig. 7 in einem Längsschnitt gezeigte Befestigungselement 3 bzw. 4 unterscheidet sich von dem in Fig. 5 gezeigten Befestigungselement durch eine Kontaktvorrichtung 27. Diese besteht im wesentlichen aus einem Kontaktelement 28 und einer Kontaktfeder 29. Das Kontaktelement 28 ist in einem Isolierstück 38 gehalten, das einen Teilbereich des Befestigungselementes 3 bildet. Außerhalb des Isolierstückes 38 ist das Kontaktelement 28 in einer Bohrung 39 geführt und somit vollständig gegenüber dem Befestigungselement 3 sowie der Heckhaube 2 isoliert. Endseits ist das Kontaktelement 28 mit einer elektrischen Leitung 40 verbunden. Die Oberfläche des Kontaktelementes 28 ist gegenüber dem Isolierstück 38 kuppelförmig und leicht erhöht ausgeführt.

Die Kontaktfeder 29 ist durch einen Niet 41 in einer Aussparung 42 des äußeren Bodens 7a mit einer elektrischen Leitung 30 verbunden, die zwischen dem äußeren Boden 7a und einem inneren Boden 7b des zweischalig ausgeführten Kofferbodens geführt ist. Der Niet 41 durchdringt ebensowenig wie die Leitung 30 den inneren Boden 7b. Ebenfalls zwischen dem inneren Kofferboden 7b und dem äußeren Kofferboden 7a ist ein Magnet 37 angeordnet, dem innerhalb des Befestigungselementes 3 bei montiertem Koffer 7ein Reed-Kontakt 35 gegenüberliegt. Dieser Reed-Kontakt 35 ist in einer zweiten Bohrung 43 des Befestigungselementes 3 untergebracht und mit einer Leitung 44 verbunden.

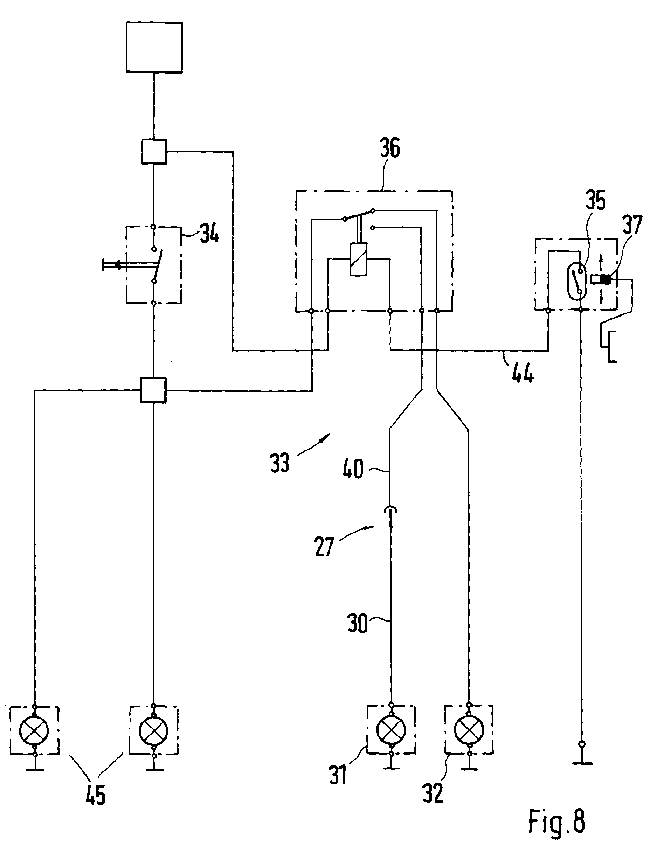

Das Schaltbild nach Fig. 8 zeigt insbesondere die Beschaltung einer am Koffer 7 angeordneten Bremsleuchte 31 sowie einer am Fahrzeug angeordneten Bremsleuchte 32. Beide Bremsleuchten 31, 32 sind, ebenso wie weitere am Fahrzeug angeordnete Bremsleuchten 45, mit einem Bremslichtschalter 34 verbunden. Zum alternativen Betrieb der Bremsleuchten 31 und 32 ist eine Umschalteinrichtung 33 vorgesehen, die aus einem Relais 36 sowie dem Reed-Kontakt 35 besteht. Die Umschalteinrichtung 33 wird durch den Magneten 37 betätigt, wenn der Koffer 7 seine Endlage auf der Abstützfläche 25 des Befestigungselementes 3 erreicht hat und der Magnet 37 dem Reed-Kontakt 35 gegenüberliegt, so daß der Reed-Kontakt 35 betätigt ist.

In der dargestellten Ruhelage des Relais 36 verbindet dies den Bremslichtschalter 34 mit der am Fahrzeug angeordneten Bremsleuchte 32. Wird hingegen der Reed-Kontakt 35 durch den Magneten 37 betätigt, so fällt das Relais 36 in seiner Arbeitslage und anstelle der im Fahrzeug angeordneten Bremsleuchte 32 wird die am Koffer 7 angeordnete Bremsleuchte 31 mit dem Bremslichtschalter 34 verbunden.

## Patentansprüche

1. Kontaktvorrichtung (27) für einen lösbaren Koffer (7) auf einer Fahrzeughaube (2), insbesondere auf einer Heckhaube eines Kraftfahrzeugs, **dadurch gekennzeichnet**, daß die Kontaktvorrichtung (27) an einem auf einer Haubenfläche angeordneten Befestigungselemente (3, 4, 5) angeordnet ist.

2. Kontaktvorrichtung nach Anspruch 1, **dadurch gekennzeichnet**, daß die Kontaktvorrichtung (27) aus einem an einer Abstützfläche (25) des Befestigungselementes (3, 4, 5) Kontaktelement (28) und einer korrespondierend am Boden (7a) des Koffers (7) angeordneten Kontaktfeder (29) besteht.

3. Kontaktvorrichtung nach Anspruch 2, **dadurch gekennzeichnet**, daß das Kontaktelement (28) gegenüber dem Befestigungselement (3, 4, 5) isoliert ist, wobei zur Isolierung ein Teilbereich des Befestigungselementes (3, 4, 5) aus isolierendem Material gefertigt ist.

4. Kontakivorrichtung nach Anspruch 2, **dadurch gekennzeichnet**, daß das für das Kontaktelement (28) und das für die Kontaktfeder (29) verwendete Material ähnliches Normalpotential aufweisen.

5. Kontaktvorrichtung nach Anspruch 2, 3 oder 4, **dadurch gekennzeichnet**, daß der Boden (7a) des Koffers (7) in zweischaliger Bauweise ausgeführt ist, wobei die Kontaktfeder (29) am äußeren Boden (7a) gehalten und mit einer zwischen dem äußeren Boden (7a) und einem inneren Boden (7b) geführten Leitung (30) verbunden ist.

6. Leuchte (31) für einen lösbaren Koffer (7) auf einer Fahrzeughaube (2), insbesondere auf einer Heckhaube eines Kraftfahrzeugs, **dadurch gekennzeichnet**, daß der Koffer (7) in zweischaliger Bauweise ausgeführt ist, wobei die Leuchte (31) an der äußeren Schale (7a) gehalten ist und die innere Schale (7b) nicht durchdringt.

7. Leuchte nach Anspruch 6, **dadurch gekennzeichnet**, daß eine Leitung zur Stromzufuhr für die Lampe (31) zwischen der äußeren Schale (7a) und der inneren Schale (7b) geführt ist.

8. Leuchte nach Anspruch 6 oder 7, **dadurch gekennzeichnet**, daß die Leuchte (31) eine Zusatzbremsleuchte ist.

9. Leuchte nach Anspruch 8, **dadurch gekennzeichnet**, daß am Fahrzeug eine weitere Zusatzbremsleuchte (32) vorgesehen ist, und eine Umschaltvorrichtung (33) einen Bremslichtschalter (34) dann mit der Zusatzbremsleuchte (31) am Koffer (7) anstelle der weiteren Zusatzbremsleuchte (32) am Fahrzeug verbindet, wenn der Koffer mit dem Fahrzeug verbunden ist.

10. Leuchte nach Anspruch 9, **dadurch gekennzeichnet**, daß die Umschaltvorrichtung (33) den Bremslichtschalter (34) dann mit der Zusatzbremsleuchte (31) am Koffer (7) anstelle der weiteren Zusatzbremsleuchte (32) am Fahrzeug verbindet, wenn die Umschaltvorrichtung durch eine Widerstandsüberwachung erkennt, daß sie mit der Zusatzbremsleuchte (31) am Koffer (7) verbunden ist.

11. Leuchte nach Anspruch 9, **dadurch gekennzeichnet**, daß die Umschaltvorrichtung (33) aus einem über einen Reed-Kontakt (35) betätigten Relais (36) besteht, wobei der Reed-Kontakt durch einen im Boden des Koffers (7) angeordneten Magneten (37) betätigt ist.

12. Leuchte nach Anspruch 11, **dadurch gekennzeichnet**, daß der Reed-Kontakt (35) in einem Befestigungselement (3, 4, 5) für den Koffer (7) angeordnet ist.

13. Leuchte nach einem der Ansprüche 6 bis 12, **dadurch gekennzeichnet**, daß zur elektrischen Verbindung mit dem Fahrzeug zumindest eine Kontaktvorrichtung (27) nach einem der Ansprüche 1 bis 5 verwendet ist.
